# FASCICULE DE BREVET EUROPEEN

(11) **EP 2 319 902 B1**
(45) Date de publication et mention de la délivrance du brevet: **11.12.2013**
(21) Numéro de dépôt: 10290575.9
(22) Date de dépôt: 25.10.2010
(51) Int. Cl.: C10G 45/08, C10G 45/12, C10G 47/20, C10G 65/12, B01J 29/10, B01J 29/14, B01J 29/16, B01J 35/10

(54) **Procédé d'hydrocraquage mettant en oeuvre une zéolithe modifiée par un traitement basique**
Hydrocrack-Verfahren, bei dem ein durch eine basische Behandlung modifizierter Zeolith eingesetzt wird
Hydrocracking method using a zeolite modified by a basic treatment

(30) Priorité: 10.11.2009 FR 0905404
(43) Date de publication de la demande: 11.05.2011
(73) Titulaire: IFP Energies nouvelles, 92852 Rueil-Malmaison Cedex (FR)
(72) Inventeur: Simon Laurent, 69100 Villeurbanne (FR); Guillon, Emmanuelle, 69390 Vourles (FR)

(56) Documents cités:
- WO-A1-2006/070090
- FR-A1- 2 793 704
- US-A- 3 130 006
- US-A- 4 451 572
- US-A- 5 208 197
- SUSANA LOPES SILVA: "Study of hydrocracking catalysts based on modified USY zeolites", INTERNET CITATION, 30 septembre 2009 (2009-09-30), XP002586872,

## Description

### Domaine technique

La présente invention concerne un procédé d'hydroconversion et en particulier un procédé d'hydrocraquage et / ou d'hydrotraitement mettant en oeuvre un catalyseur comprenant une phase active contenant au moins un élément hydro-déshydrogénant choisi parmi les éléments du groupe VIB et du groupe VIII non noble de la classification périodique, pris seuls ou en mélange et un support comprenant au moins une zéolithe Y désaluminée présentant un rapport atomique global initial de silicium sur aluminium compris entre 2,5 et 20, une fraction pondérale d'atome d'aluminium extra réseau initiale supérieure à 10%, par rapport à la masse totale de l'aluminium présent dans la zéolithe, un volume mésoporeux initial mesuré par porosimétrie à l'azote supérieur à 0,07 ml.g⁻¹, et un parametre cristallin initial a₀ de la maille élémentaire compris entre 24,38 Å et 24,30 Å, ladite zéolithe étant modifiée par a) une étape de traitement basique consistant en le mélange de ladite zéolithe Y désaluminée avec une solution aqueuse basique, et au moins une étape c) de traitement thermique, ledit catalyseur étant un catalyseur phase sulfure.

En particulier, l'invention concerne l'hydrocraquage de charges hydrocarbonées contenant par exemple des composés aromatiques, et/ou oléfiniques, et/ou naphténiques, et/ou paraffiniques à l'exclusion des charges issues du procédé Fischer-Tropsch et contenant éventuellement des métaux, et/ou de l'azote, et/ou de l'oxygène et/ou du soufre.

L'objectif du procédé d'hydrocraquage est essentiellement la production de distillats moyens, c'est-à-dire une coupe kérosène ayant un point d'ébullition compris entre 150 et 250°C, et une coupe gazole ayant un point d'ébullition compris entre 250 et 380°C.

### Art Antérieur

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports dont les surfaces varient généralement de 150 à 800 m².g⁻¹ et présentant une acidité superficielle, telles que les alumines halogénées (chlorées ou fluorées notamment), les combinaisons d'oxydes de bore et d'aluminium, les silice-alumine amorphes et les zéolithes. La fonction hydrogénante est apportée soit par un ou plusieurs métaux du groupe VIB de la classification périodique des éléments, soit par une association d'au moins un métal du groupe VIB de la classification périodique et au moins un métal du groupe VIII.

La distance entre les deux fonctions acide et hydrogénante est un des paramètres qui régit l'activité et la sélectivité du catalyseur. Une fonction acide faible et une fonction hydrogénante forte donnent des catalyseurs peu actifs, travaillant à température en général élevée (supérieure ou égale à 390-400°C), et à vitesse spatiale d'alimentation faible (la WH exprimée en volume de charge à traiter par unité de volume de catalyseur et par heure est généralement inférieure ou égale à 2), mais dotés d'une très bonne sélectivité en distillats moyens (carburéacteurs et gazoles). Inversement, une fonction acide forte et une fonction hydrogénante faible donnent des catalyseurs actifs, mais présentant de moins bonnes sélectivités en distillats moyens.

Un type de catalyseurs conventionnels d'hydrocraquage est à base de supports amorphes modérément acides, tels les silice-alumines par exemple. Ces systèmes sont utilisés pour produire des distillats moyens de bonne qualité, et éventuellement, des bases huiles. Ces catalyseurs sont par exemple utilisés dans les procédés en une étape. L'inconvénient de ces catalyseurs à base de support amorphe est leur faible activité.

Les catalyseurs comportant par exemple de la zéolithe Y de type structural FAU présentent quant à eux une activité catalytique supérieure à celle des silice-alumines, mais présentent des sélectivités en distillats moyens (carburéacteurs et gazoles) plus faibles. Cette différence est attribuée à la différence de force des sites acides sur les deux types de matériaux.

La modification de zéolithe par traitement alcalin est un procédé qui a été étudié dans la littérature ouverte. Ce procédé de modification par traitement alcalin permet de créer de la mésoporosité dans certain type de zéolithe comme la zéolithe microporeuse ZSM-5 dans Ogura et al., Applied Catal. A:General, 219 (2001) 33, Groen et al., Colloids and surfaces A: Physicochem. Eng. Aspects 241 (2004) 53, et Groen et al., Microporous and Mesoporous Materials, 69 (2004) 29, la FER dans Groen et al., Microporous and Mesoporous Materials, 69 (2004) 29, la MOR dans Groen et al., Microporous and Mesoporous Materials, 69 (2004) 29 et Groen et al., J. Catal. 243 (2006) 212 ou la zéolithe BEA Groen et al., Microporous and Mesoporous Materials, 69 (2004) 29, Groen et al., J. Catal. 243 (2006) 212 et Groen et al., Microporous and Mesoporous Materials, 114 (2008) 93 et les catalyseurs obtenus été utilisés pour différentes réactions catalytiques. Ces études montrent que le traitement alcalin permet de retirer des atomes de silicium de la structure créant ainsi une mésoporosité. La création de mésoporosité et le maintient de la cristallinité et des propriétés acides de la zéolithe sont identifiés dans ces publications comme étant liés au rapport molaire global Si/Al initial des zéolithes, ledit rapport global Si/Al optimal devant être compris entre 20 et de 50. En effet, en dehors de cette gamme de rapport global Si/Al compris entre 20 et 50, et par exemple pour un rapport Si/Al global inférieure à 20, la structure de la zéolithe est très stable du fait de la présence d'un grand nombre d'atome d'aluminium qui empêchent l'extraction des atomes de silicium et donc la création de mésoporosité supplémentaire.

US 5 208 197 décrit un procédé d'hydrocraquage en présence d'une zéolithe.

### Intérêt de l'invention

La zéolithe Y désaluminée contient des mésopores, créés en extrayant des atomes d'aluminium de la charpente de la zéolithe. La présence de mésopores permet d'améliorer la sélectivité en distillats moyens des catalyseurs d'hydrocraquage mettant en oeuvre une telle zéolithe en facilitant la diffusion des produits primaires de la réaction (carburéacteurs et gazoles) et ainsi en limitant le surcraquage en produits légers. Cependant, l'extraction des atomes d'aluminium de la charpente diminue l'acidité de Brønsted de ladite zéolithe et donc son activité catalytique. Le gain en sélectivité en distillats moyens liée à la mésoporosité de la zéolithe se fait donc au détriment de l'activité catalytique.

Les travaux de recherche effectués par le demandeur sur la modification de nombreuses zéolithes et solides microporeux cristallisés et sur les phases actives hydrogénantes, l'ont conduit à découvrir que, de façon surprenante, un catalyseur mis en oeuvre dans un procédé d'hydrocraquage et/ou d'hydrotraitement de charges hydrocarbonées comprenant une phase active contenant au moins un élément hydro-déshydrogénant choisi parmi les éléments du groupe VIB et du groupe VIII non noble de la classification périodique, pris seuls ou en mélange et un support comprenant au moins une zéolithe Y désaluminée et contenant une fraction pondérale spécifique d'atomes d'aluminium extra-réseau, ladite zéolithe étant modifiée par a) une étape de traitement basique consistant en le mélange de ladite zéolithe Y désaluminée avec une solution aqueuse basique permettant de retirer des atomes de silicium de la structure et d'insérer des atomes d'aluminium extra-réseau dans la charpente de la zéolithe, et au moins une étape c) de traitement thermique, ledit catalyseur étant un catalyseur phase sulfure, permettait d'obtenir une activité, c'est à dire un niveau de conversion plus élevé, en hydrocraquage et/ou en hydrotraitement, et une sélectivité en distillat moyens (kérosène et gazoles) plus élevées.

Sans être lié par un quelconque théorie, le traitement basique de la zéolithe désaluminée et contenant une fraction pondérale spécifique d'atomes d'aluminium extra-réseau initiale permet la création de mésopores formant un réseau de mésopores interconnectés jusqu'a la surface des cristaux de zéolithe, par désilication, c'est à dire par extraction des atomes de silicium de la charpente de la zéolithe initiale. La création de mésoporosité accessible par la surface externe des cristaux de zéolithe favorisant la diffusion intercristalline des molécules, permet pour un catalyseur mettant en oeuvre ladite zéolithe modifiée selon l'invention, utilisé dans un procédé de production de distillats moyens, d'obtenir une sélectivité en distillat moyens plus élevée. Par ailleurs, le traitement basique permet également la réalumination, c'est à dire la réintroduction d'au moins une partie des atomes d'aluminium extra-réseau présents dans la zéolithe initiale dans la charpente de la zéolithe modifiée, cette réalumination permettant une augmentation de l'acidité de Bronsted de la zéolithe modifiée, se traduisant pour un catalyseur mettant en oeuvre ladite zéolithe modifiée selon l'invention, par des propriétés catalytiques améliorées, c'est à dire une meilleure conversion.

Un objectif de l'invention est donc de fournir un procédé d'hydrocraquage et/ou d'hydrotraitement de charges hydrocarbonées mettant en oeuvre un catalyseur à base d'une zéolithe modifiée par un traitement basique permettant d'atteindre une conversion plus élevée ainsi qu'une meilleure sélectivité en distillats moyens tel que défini dans la revendication 1.

### Description détaillée du catalyseur selon l'invention

Conformément à l'invention, le procédé met en oeuvre un catalyseur comprenant une phase active comprenant au moins un élément hydro-déshydrogénant choisi parmi les éléments du groupe VIB et du groupe VIII non noble de la classification périodique, pris seuls ou en mélange, ledit catalyseur étant un catalyseur phase sulfure.

### La phase hydrogénante

De préférence, les éléments du groupe VIB de la classification périodique sont choisis dans le groupe formé par le tungstène et le molybdène, pris seuls ou en mélange. Selon un mode de réalisation préféré, l'élément hydro-déshydrogénant choisi dans le groupe formé par les éléments du groupe VIB de la classification périodique est le molybdène. Selon un autre mode de réalisation préféré, l'élément hydro-déshydrogénant choisi dans le groupe formé par les éléments du groupe VIB de la classification périodique est le tungstène.

De préférence, les éléments non nobles du groupe VIII de la classification périodique sont choisis dans le groupe formé par le cobalt et le nickel, pris seuls ou en mélange. Selon un mode de réalisation préféré, l'élément hydro-déshydrogénant choisi dans le groupe formé par les éléments du groupe VIII non noble est le cobalt. Selon un autre mode de réalisation préféré, l'élément hydro-déshydrogénant choisi dans le groupe formé par les éléments du groupe VIII non noble est le nickel.

De préférence, ledit catalyseur comprend au moins un métal du groupe VIB en combinaison avec au moins un métal non noble du groupe VIII, les éléments non nobles du groupe VIII étant choisi dans le groupe formé par le cobalt et le nickel, pris seuls ou en mélange et les éléments du groupe VIB étant choisi dans le groupe formé par le tungstène et le molybdène, pris seuls ou en mélange.

D'une manière avantageuse, on utilise les associations de métaux suivantes : nickel-molybdène, cobalt-molybdène, nickel-tungstène, cobalt-tungstène, les associations préférées sont : nickel-molybdène, cobalt-molybdène, cobalt-tungstène, nickel-tungstène et encore plus avantageusement nickel-moybdène et nickel-tungstène.

Dans le cas où le catalyseur comprend au moins un métal du groupe VIB en combinaison avec au moins un métal non noble du groupe VIII, la teneur en métal du groupe VIB est avantageusement comprise, en équivalent oxyde, entre 5 et 40 % en poids par rapport à la masse totale dudit catalyseur, de manière préférée entre 10 et 35 % en poids et de manière très préférée entre 15 et 30 % en poids et la teneur en métal non noble du groupe VIII est avantageusement comprise, en équivalent oxyde, entre 0,5 et 10 % en poids par rapport à la masse totale dudit catalyseur, de manière préférée entre 1 et 8 % en poids et de manière très préférée entre 1,5 et 6 % en poids.

Il est également possible d'utiliser des associations de trois métaux par exemple nickel-cobalt-molybdène, nickel-molybdène-tungstène, nickel-cobalt-tungstène.

D'une manière avantageuse, on utilise les associations de métaux suivantes : nickel-niobium-molybdène, cobalt-niobium-molybdène, nickel-niobium-tungstène, cobalt-niobium-tungstène, les associations préférées étant : nickel-niobium-molybdène, cobalt-niobium-molybdène. Il est également possible d'utiliser des associations de quatre métaux par exemple nickel-cobalt-niobium-molybdène.

Le catalyseur peut également avantageusement contenir :
- de 0 à 20% en poids, de préférence de 0,1 à 15% en poids et de manière encore plus préférée de 0,1 à 10% en poids par rapport à la masse totale du catalyseur d'au moins un élément dopant choisi dans le groupe constitué par le silicium, le bore et le phosphore, non compris le silicium contenu dans la charpente de la zéolithe et éventuellement
- de 0 à 60% en poids, de préférence de 0,1 à 50% en poids, et de manière encore plus préférée de 0,1 à 40% en poids par rapport à la masse totale du catalyseur, d'au moins un élément choisi dans le groupe VB et de préférence le niobium et éventuellement encore
- de 0 à 20% en poids, de préférence de 0,1 à 15% en poids et de manière encore plus préférée de 0,1 à 10% en poids par rapport à la masse totale du catalyseur d'au moins un élément choisi dans le groupe VIIA, de préférence le fluor.

Conformément à l'invention, le catalyseur utilisé dans le procédé selon l'invention comporte un support comprenant au moins une zéolithe modifiée selon l'invention et avantageusement une matrice minérale poreuse de type oxyde, ledit support comprenant et de préférence étant constitué de, de préférence :
- 0,1 à 99,8% en poids, de préférence de 0,1 à 80% en poids, de manière encore plus préférée de 0,1 à 70% en poids, et de manière très préférée 0,1 à 50% en poids de zéolithe modifiée selon l'invention par rapport à la masse totale du catalyseur,
- 0,2 à 99,9% en poids, de préférence de 20 à 99,9% de manière préférée de 30 à 99,9% en poids, et de manière très préférée de 50 à 99,9% en poids par rapport à la masse totale du catalyseur, d'au moins une matrice minérale poreuse de type oxyde.

### La zéolithe selon l'invention

Conformément à l'invention, la zéolithe initialement utilisée convenant pour la mise en oeuvre du support du catalyseur mis en oeuvre dans le procédé d'hydrocraquage et/ou d'hydrotraitement de charges hydrocarbonées est la zéolithe Y désaluminée (USY) de type structurale FAU.

Conformément à l'invention, la zéolithe initiale Y désaluminée convenant pour la mise en oeuvre du support du catalyseur utilisé dans le procédé d'hydrocraquage et/ou d'hydrotraitement de charges hydrocarbonées, présente avant d'être modifiée, un rapport atomique global initial de silicium sur aluminium compris entre 2,5 et 20,0, de préférence entre 2,6 et 12,0 et de manière préférée entre 2,7 et 10,0, une fraction pondérale d'atome d'aluminium extra réseau initiale supérieure à 10%, de préférence supérieure à 20% et de manière préférée supérieure à 30% poids par rapport à la masse totale de l'aluminium présent dans la zéolithe, un volume mésoporeux initial mesuré par porosimétrie à l'azote supérieur à 0,07 ml.g⁻¹, de préférence supérieur à 0,10 ml.g⁻¹, et de manière préférée supérieur à 0,13 ml.g-¹ et un parametre cristallin initial a₀ de la maille élémentaire compris entre 24,38 Å et 24,30 Å.

De préférence, la zéolithe initiale Y désaluminée convenant pour la mise en oeuvre du support du catalyseur utilisé dans le procédé d'hydrocraquage et/ou d'hydrotraitement selon l'invention, présente avant d'être modifiée, un volume microporeux initial mesuré par porosimétrie à l'azote supérieur à 0,20 ml.g⁻¹, et de préférence supérieur à 0,25 ml.g-¹.

Selon l'invention, ladite zéolithe initiale Y désaluminée présentant un rapport atomique global initial Si/Al compris entre 2,5 et 20,0, de préférence entre 2,6 et 12,0 et de manière préférée entre 2,7 et 10,0, ledit rapport atomique global Si/Al étant mesuré par Fluorescence X (FX) et présentant une fraction pondérale d'atome d'aluminium extra réseau initiale mesurée par RMN de l'aluminium est supérieure à 10%, de préférence supérieure à 20% et de manière préférée supérieure à 30% poids par rapport à la masse totale de l'aluminium présent dans la zéolithe est obtenue par désalumination d'une zéolithe Y de type structural FAU par toutes les méthodes de désalulmination connues de l'homme du métier.

### Obtention de la zéolithe initiale Y désaluminée.

La zéolithe Y de type structural FAU se présentant avantageusement sous forme NaY après synthèse, peut avantageusement subir un ou plusieurs échanges ioniques avant de subir l'étape de désalumination.

Le traitement de désalumination de la zéolithe Y de type structural FAU présentant généralement un rapport atomique global Si/Al après synthèse compris entre 2,3 et 2,8 peut avantageusement être réalisé par toutes les méthodes connues de l'homme du métier. De manière préférée, la désalumination est réalisé par un traitement thermique en présence de vapeur d'eau (ou steaming selon la terminologie anglo-saxonne) et/ou par une ou plusieurs attaques acides avantageusement réalisées par traitement avec une solution aqueuse d'acide minéral ou organique.

De préférence, la désalumination est réalisée par un traitement thermique suivi d'une ou plusieurs attaques acides ou seulement par une ou plusieurs attaques acides.

De préférence, le traitement thermique en présence de vapeur d'eau auquel est soumis la zéolithe Y est réalisé à une température comprise entre 200 et 900°C, de préférence entre 300 et 900°C, de manière encore plus préférée entre 400 et 750°C. La durée dudit traitement thermique est avantageusement supérieure ou égale à 0,5h, de préférence comprise entre 0,5h et 24h, et de manière très préférée comprise entre 1 h et 12h. Le pourcentage volumique de vapeur d'eau durant le traitement thermique est avantageusement compris entre 5 et 100%, de préférence entre 20 et 100%, de manière entre 40% et 100%. La fraction volumique autre que la vapeur d'eau éventuellement présente est formée d'air. Le débit de gaz formé de vapeur d'eau et éventuellement d'air est avantageusement compris entre 0,2 L/h/g et 10 L/h/g de la zéolithe Y.

Le traitement thermique permet d'extraire les atomes d'aluminium de la charpente de la zéolithe Y tout en maintenant le rapport atomique global Si/Al de la zéolithe traitée inchangé.

Le traitement thermique en présence de vapeur d'eau est avantageusement répété autant de fois qu'il est nécessaire pour obtenir la zéolithe Y initiale désaluminée convenant pour la mise en oeuvre du support du catalyseur utilisé dans le procédé selon l'invention possédant les caractéristiques désirées et en particulier une fraction pondérale d'atome d'aluminium extra réseau représentant plus de 10% poids par rapport à la masse totale d'aluminium présents dans ladite zéolithe. Le nombre de traitement thermique est avantageusement inférieur à 4 et de préférence, on réalise un seul traitement thermique à l'issu duquel la fraction pondérale d'atome d'aluminium extra réseau initiale est mesurée par RMN de l'aluminium.

Afin de réaliser une désalumination de ladite zéolithe Y et d'ajuster le rapport atomique global Si/Al de la zéolithe Y désaluminée à une valeur comprise entre 2,5 et 20 selon l'invention, il est nécessaire de bien choisir et contrôler les conditions opératoires de chaque étape d'attaque acide. En particulier, la température à laquelle le traitement par la solution aqueuse d"acide minéral ou organique est réalisé, la nature et la concentration de l'acide utilisé, le rapport entre la quantité de solution acide et le poids de zéolithe traitée, la durée du traitement d'attaque acide et le nombre de traitement réalisés sont des paramètres significatifs pour la mise en oeuvre de chaque étape d'attaque acide.

L'acide choisi pour la mise en oeuvre de ladite étape d'attaque acide est avantageusement soit un acide minéral soit un acide organique, de préférence l'acide est un acide minéral choisi parmi l'acide nitrique HNO₃, l'acide chlorhydrique HCl et l'acide sulfurique H₂SO₄. De manière très préférée, l'acide est l'acide nitrique. Lorsqu'un acide organique est utilisé pour l'attaque acide, l'acide acétique CH₃CO₂H est préféré.

De préférence, le traitement d'attaque acide de la zéolithe Y par une solution aqueuse d'un acide minéral ou d'un acide organique est réalisé à une température comprise entre 30°C et 120°C, de préférence entre 50°C et 120°C, et de manière préférée entre 60 et 100°C. La concentration de l'acide dans la solution aqueuse est avantageusement comprise entre 0,05 et 20 mol.L⁻¹, de préférence entre 0,1 et 10 mol.L⁻¹, et de manière plus préférée entre 0,5 et 5 mol.L⁻¹. Le rapport entre le volume de solution acide V en ml et le poids de zéolithe Y traitée P en gramme est avantageusement compris entre 1 et 50, et de préférence entre 2 et 20. La durée de l'attaque acide est avantageusement supérieure à 1 h, de préférence comprise entre 2h et 10h, et de manière préférée entre 2h et 8h. Le nombre de traitement d'attaque acide successif de la zéolithe Y par une solution aqueuse acide est avantageusement inférieur à 4. Dans le cas où plusieurs traitement d'attaques acides successives sont réalisées, des solutions aqueuses d'acide minéral ou organique de concentrations différentes en acide peuvent être utilisées.

Afin d'ajuster le rapport atomique global Si/Al de la zéolithe Y désaluminée à une valeur comprise entre 2,5 et 20, ledit rapport est mesuré par Fluorescence X à l'issue de chaque traitement d'attaque acide réalisé.

Après avoir effectué le(s) traitement(s) d'attaque acide, la zéolithe est ensuite avantageusement lavée à l'eau distillée puis est séchée à une température comprise entre 80 et 140°C pendant une durée comprise entre 10 et 48h.

Le traitement par attaque acide permet à la fois d'extraire les atomes d'Aluminium de la charpente et d'extraire les atomes d'Aluminium des pores du solide zéolithique. Ainsi, le rapport atomique global Si/Al de la zéolithe Y désaluminée obtenue augmente jusqu'à une valeur comprise entre 2,5 et 20, ladite zéolithe convenant pour la mise en oeuvre du support du catalyseur utilisé dans le procédé selon l'invention.

De même, ladite zéolithe initiale Y désaluminée obtenue et convenant pour la mise en oeuvre du support du catalyseur utilisé dans le procédé selon l'invention, présente après désalumination un volume mésoporeux initial mesuré par porosimétrie à l'azote supérieur à 0,07 ml.g⁻¹, de préférence supérieur à 0,10 ml.g⁻¹, et de manière préférée supérieur à 0,13 ml.g⁻¹, la création de mésoporosité résultant de l'extraction des atomes d'aluminium hors des pores du solide zéolithitique et un parametre cristallin initial a₀ de la maille élémentaire compris entre 24,38 Å et 24,30 Å.

Ladite zéolithe initiale Y désaluminée obtenue présente également avantageusement un volume microporeux initial mesuré par porosimétrie à l'azote supérieur à 0,20 ml.g⁻¹, et de préférence supérieur à 0,25 ml.g⁻¹.

Les volumes microporeux et mésoporeux de la zéolithe Y désaluminée sont mesurés par adsorption / désorption d'azote et le paramètre de maille de la zéolithe est mesuré par diffraction des Rayons X (DRX).

Un autre objet de la présente invention est un procédé de modification d'une zéolithe Y désaluminée comportant a) une étape de traitement basique consistant en le mélange de ladite zéolithe Y désaluminée avec une solution aqueuse basique, ladite solution aqueuse basique étant une solution de composés basiques choisis parmi les bases alcalines et les bases fortes non alcalines, ladite étape a) étant réalisée à une température comprise entre 40 et 100°C et pendant une durée comprise entre 5 minutes et 5h et au moins une étape c) de traitement thermique réalisé à une température comprise entre 200 et 700°C.

### Procédé de modification de la zéolithe Y désaluminée initiale selon l'invention

Conformément à l'invention, la zéolithe initiale Y désaluminée convenant pour la mise en oeuvre du support du catalyseur utilisé dans le procédé selon l'invention est modifiée par un procédé de modification spécifique comprenant a) une étape de traitement basique consistant en le mélange de ladite zéolithe Y désaluminée avec une solution aqueuse basique, ladite solution aqueuse basique étant une solution de composés basiques choisis parmi les bases alcalines et les bases fortes non alcalines, ladite étape a) étant réalisée à une température comprise entre 40 et 100°C et pendant une durée comprise entre 5 minutes et 5h et au moins une étape c) de traitement thermique réalisée à une température comprise entre 200 et 700°C.

L'étape a) de traitement basique permet de retirer des atomes de silicium de la structure et d'insérer des atomes d'aluminium extra-réseau dans la charpente.

Selon l'invention, le procédé de modification de ladite zéolithe initiale Y désaluminée comporte une étape a) de traitement basique consistant en le mélange de ladite zéolithe désaluminée USY avec une solution aqueuse basique, ladite solution aqueuse basique étant une solution de composés basiques choisis parmi les bases alcalines et les bases fortes non alcalines, ladite étape a) étant réalisée à une température comprise entre 40 et 100°C et pendant une durée comprise entre 5 minutes et 5h.

Les composés basiques choisis parmi les bases alcalines sont de préférence choisis parmi les carbonates alcalins et les hydroxydes alcalins, les cations alcalins des carbonates alcalins et des hydroxydes alcalins appartenant avantageusement aux groupes IA ou IIA de la classification périodique et les bases fortes non alcalines sont de préférence choisies parmi les ammoniums quaternaires pris seuls ou en mélange et de manière préférée, la base forte non alcaline est l'hydroxyde de tétraméthylammonium.

Lesdits cations alcalins des carbonates alcalins et des hydroxydes alcalins appartenant avantageusement aux groupes IA ou IIA de la classification périodique sont de préférence choisis parmi les cations Na⁺, Li⁺, K⁺, Rb⁺, Cs⁺, Ba²⁺ et Ca²⁺ et de manière très préférée, ledit cation est le cation Na⁺ ou K⁺.

De préférence, la solution aqueuse est une solution de carbonate de sodium ou d'hydroxyde de sodium et de manière préférée, la solution aqueuse est une solution d'hydroxyde de sodium.

Ladite solution aqueuse basique de concentration comprise entre 0,001 mol/L et 12 mol/L, de manière préférée de concentration entre 0,005 mol/L et 11 mol/L et de manière encore plus préférées de concentration entre 0,01 mol/L et 9 mol/L.

Selon l'invention, l'étape a) de traitement basique du procédé de modification de ladite zéolithe initiale USY désaluminée est réalisée dans des conditions de températures comprises entre 40 et 100°C (reflux) et de manière préférées entre 40 et 90°C et pendant une durée comprise entre 5 min et 5h, de manière préférée entre 15 min et 4 h et de manière encore plus préférée entre 15 min et 3 h.

Une fois le traitement basique de ladite zéolithe terminée, la solution est refroidie rapidement à température ambiante puis ladite zéolithe est séparée du liquide par toutes les techniques connues de l'homme du métier. La séparation peut-être réalisée par filtration ou par centrifugation, et de manière préférée par centrifugation. La zéolithe USY modifiée obtenue est ensuite lavée à l'eau distillée à une température comprise entre 20 et 100°C et de préférence à une température comprise entre 40 et 80°C et de manière très préférée à 50°C et séchée à une température comprise entre 80 et 150°C et de préférence entre 100 et 130°C et de manière très préférée à 120°C.

Dans le cas ou l'étape a) de traitement basique consiste en le mélange de ladite zéolithe initiale Y désaluminée avec une solution aqueuse basique de composés choisis parmi les bases alcalines, la zéolithe contenue dans le support du catalyseur utilisé dans le procédé selon l'invention contient, à l'issue de l'étape a) du procédé de modification une fraction partielle ou totale d'ions alcalins en position cationique.

dans le cas ou l'étape a) de traitement basique consiste en le mélange de ladite zéolithe initiale Y désaluminée avec une solution aqueuse basique de composés choisis parmi les bases non alcalines, la zéolithe contenue dans le support du catalyseur utilisé dans le procédé selon l'invention contient, à l'issue de l'étape a) du procédé de modification une fraction partielle ou totale d'ions ammonium quaternaires en position cationique.

Lors de l'étape a) de traitement basique du procédé de modification de la zéolithe Y initiale désaluminée selon l'invention, une partie des atomes de silicium contenu dans la charpente de ladite zéolithe sont extraits, le phénomène est appelé désilication, créant des vides dans la structure et la formation d'une mésoporosité et/ou permettant la réinsertion d'au moins une partie de la fraction des atomes d'aluminium extra-réseau présents dans ladite zéolithe Y initiale désaluminée, en lieu et place des atomes de silicium extraits par désilication et permettant ainsi la formation de nouveau sites acides de Brønsted. Ce deuxième phénomène est appelé ré-alumination.

Dans le cas ou l'étape a) de traitement basique consiste en le mélange de ladite zéolithe initiale désaluminée USY avec une solution aqueuse basique de composés basiques choisis parmi les bases alcalines et de préférence choisis parmi les carbonates alcalins et les hydroxydes alcalins et de manière très préférée avec une solution d'hydroxyde de sodium (NaOH), le procédé de modification de ladite zéolithe initiale USY désaluminée comporte avantageusement une étape b) d'au moins un échange partiel ou total desdits cations alcalins appartenant aux groupes IA et IIA de la classification périodique introduits lors de l'étape a) et présents en position cationique, par des cations NH₄⁺ et de préférence des cations Na⁺ par des cations NH₄⁺.

On entend par échange partiel ou total des cations alcalins par des cations NH₄⁺, l'échange de 80 à 100%, de manière préférée de 85 à 99,5% et de manière plus préférée de 88 et 99%, desdits cations alcalins par des cations NH₄⁺. La quantité de cations alcalins restante et de préférence, la quantité de cations Na⁺ restante dans la zéolithe modifiée, par rapport à la quantité de cations NH₄⁺ initialement présente dans la zéolithe, à l'issue de l'étape b) est avantageusement comprise entre 0 et 20%, de préférence entre 0,5 et 15% de manière préférée, entre 1 et 12%.

De préférence, pour cette étape, on procède à plusieurs échange(s) ionique(s) avec une solution contenant au moins un sel d'ammonium choisi parmi les sels de chlorate, sulfate, nitrate, phosphate, ou acétate d'ammonium, de manière à éliminer au moins en partie, les cations alcalins et de préférence les cations Na⁺ présents dans la zéolithe. De préférence, le sel d'ammonium est le nitrate d'ammonium NH₄NO₃.

Ainsi, la teneur en cations alcalins restante et de préférence en cations Na⁺ dans la zéolithe modifiée à l'issue de l'étape b) est de préférence telle que le rapport molaire cation alcalin/Aluminium et de préférence le rapport molaire Na/Al, est compris entre 0,2:1 et 0:1, de préférence compris entre 0,15:1 et 0,005:1, et de manière plus préférée compris entre 0,12:1 et 0,01:1.

Le rapport Na/Al désiré est obtenu en ajustant la concentration en NH₄⁺ de la solution d'échange cationique, la température de l'échange cationique et le nombre d'échange cationique. La concentration de la solution en NH₄⁺ dans la solution varie avantageusement entre 0,01 et 12 mol/L, et de préférence entre 1 et 10 mol/L. La température de l'étape d'échange est avantageusement comprise entre 20 et 100°C, de préférence entre 60 et 95°C, de manière préférée entre 60 et 90°C de manière plus préférée entre 60 et 85°C et de manière encore plus préférée entre 60 et 80°C. Le nombre d'échange cationique varie avantageusement entre 1 et 10 et de préférence entre 1 et 4.

Dans le cas ou l'étape a) de traitement basique consiste en le mélange de ladite zéolithe initiale désaluminée USY avec une solution aqueuse de composés basiques choisis parmi les bases fortes non alcalines de préférence choisies parmi les ammoniums quaternaires pris seuls ou en mélange et de manière préférée la base forte non alcaline étant l'hydroxyde de tétraméthylammonium, la zéolithe modifiée issue de l'étape a) contient une fraction partielle ou totale d'ions ammonium quaternaires en position cationique.

Dans ce cas, le procédé de modification de ladite zéolithe initiale USY désaluminée ne comporte avantageusement pas d'étape b) d'au moins un échange partiel ou total intermédiaire, la zéolithe modifiée issue de l'étape a) subit directement l'étape c) de traitement thermique.

Selon l'invention, le procédé de modification de la zéolithe Y initiale désaluminée comporte ensuite au moins une étape c) de traitement thermique.

Dans le cas ou l'étape a) de traitement basique consiste en le mélange de ladite zéolithe initiale désaluminée USY avec une solution aqueuse basique de composés choisis parmi les bases alcalines et de préférence choisis parmi les carbonates alcalins et les hydroxydes alcalins et de manière très préférée avec une solution d'hydroxyde de sodium (NaOH), l'étape c) de traitement thermique permet à la fois le séchage et la transformation des cations NH₄⁺ échangés lors de l'étape b), en protons.

Dans le cas ou l'étape a) de traitement basique consiste en le mélange de ladite zéolithe initiale désaluminée USY avec une solution aqueuse basique de composés choisis parmi les bases fortes non alcalines et de préférence choisies parmi les ammoniums quaternaires pris seuls ou en mélange et de manière préférée la base forte non alcaline étant l'hydroxyde de tétraméthylammonium, l'étape c) de traitement thermique permet à la fois le séchage et la décomposition du cations d'ammonium quaternaire en position de contre-ions et la formation de protons.

Dans tous les cas, à l'issue de ladite étape c) de traitement thermique, les protons de la zéolithe sont partiellement ou totalement régénérés.

L'étape c) de traitement thermique selon l'invention est réalisé à une température comprise entre 200 et 700°C, plus préférentiellement entre 300 et 500°C. Ladite étape de traitement thermique est avantageusement mise en oeuvre sous air, sous oxygène, sous hydrogène, sous azote ou sous argon ou sous un mélange d'azote et d'argon. La durée dudit traitement est avantageusement comprise entre 1 et 5 heures.

A l'issue du procédé de modification selon l'invention, la zéolithe modifiée finale mise en oeuvre dans le support du catalyseur utilisé dans le procédé selon l'invention, présente avantageusement un volume mésoporeux final, mesuré par porosimétrie à l'azote supérieur d'au moins 10% par rapport au volume mésoporeux initiale et de préférence supérieur d'au moins 20% par rapport au volume mésoporeux initiale de la zéolithe initiale désaluminée USY, un volume microporeux final mesuré par porosimétrie à l'azote qui ne doit pas diminuer de plus de 40%, de préférence de plus de 30% et de manière préférée de plus de 20% par rapport au volume microporeux initial de ladite zéolithe initiale désaluminée USY, une acidité de Bronsted supérieure de plus de 10% et de préférence de plus de 20% par rapport à l'acidité de Bronsted de la zéolithe Y désaluminée initiale et un parametre cristallin final a₀ de la maille élémentaire supérieur au paramètre cristallin a₀ initial de la maille de la zéolithe Y désaluminée initiale.

A l'issue du procédé de modification de la zéolithe Y désaluminée selon l'invention, l'augmentation significative du volume mésoporeux de la zéolithe modifiée résultante et le maintien d'un volume microporeux significatif par rapport à la zéolithe Y désaluminée initiale traduisent la création d'une mésoporosité supplémentaire par désilication.

Par ailleurs, l'augmentation de l'acidité de Bronsted de la zéolithe modifiée finale par rapport à la zéolithe Y désaluminée initiale mettent en évidence la réintroduction des atomes d'aluminium extra réseau dans la charpente de la zéolithe c'est à dire le phénomène de réalumination.

### La matrice minérale poreuse amorphe ou mal cristallisée de type oxyde

Le support du catalyseur utilisé dans le procédé d'hydrocraquage et/ou d'hydrotraitement selon l'invention contient avantageusement une matrice minérale poreuse, de préférence amorphe, qui est avantageusement constituée d'au moins un oxyde réfractaire. Ladite matrice est avantageusement choisie dans le groupe formé par l'alumine, la silice, les argiles, l'oxyde de titane, l'oxyde de bore et la zircone, pris seul ou en mélange. La matrice peut être constituée par un mélange d'au moins deux des oxydes cités ci dessus, et de préférence la silice-alumine. On peut choisir également les aluminates. On préfère utiliser des matrices contenant de l'alumine, sous toutes ces formes connues de l'homme du métier, par exemple l'alumine gamma.

On peut aussi avantageusement utiliser des mélanges d'alumine et de silice, des mélanges d'alumine et de silice-alumine.

### Techniques de caractérisation

Le rapport Si/Al atomique global de la zéolithe Y désaluminée initiale et finale, c'est à die après modification est mesurée par fluorescence X. La fluorescence X est une technique d'analyse élémentaire globale qui permet l'analyse de tous les éléments du système périodique à partir du bore. Il est possible de doser de quelques ppm jusqu'à 100%. Dans cette invention, cette technique est utilisée pour doser le silicium et l'aluminium des zéolithes (en pourcentage massique) et permet ainsi de calculer le ratio atomique Si/Al.

La fraction pondérale des atomes d'aluminium tétracoordinés et hexacoordinés présents dans la zéolithe USY modifiée est déterminé par résonance magnétique nucléaire du solide de ²⁷Al. La RMN de l'aluminium est en effet connue pour être utilisée en vue de repérer et de quantifier les différents états de coordination de ce noyau ("Analyse physico-chimiques des catalyseurs industriels", J. Lynch, Editions Technip (2001) chap. 13, pages 290 et 291). Le spectre RMN de l'aluminium de la zéolithe USY initiale et celui de la zéolithe USY modifiée selon l'invention présente deux signaux, l'un étant caractéristique de la résonance des atomes d'aluminium tétracoordinés (c'est à dire des atomes d'aluminium compris dans le réseau cristallin de la zéolithe) et l'autre étant caractéristique de la résonance des atomes d'aluminium hexacoordinés (c'est à dire des atomes d'Aluminium en dehors du réseau cristallin ou atomes d'aluminium extra réseau). Les atomes d'aluminium tétracoordinés Al_{IV} résonnent à un déplacement chimique compris entre +40 ppm et +75 ppm et les atomes d'aluminium hexacoordinés ou extra réseau Al_{VI} résonnent à un déplacement chimique compris entre -15 ppm et +15 ppm. La fraction pondérale des deux espèces aluminiques Al_{IV} et Al_{VI} est quantifié par intégration des signaux correspondant à chacune de ces espèces.

Plus précisément, la zéolithe USY modifiée selon l'invention présente dans le support du catalyseur selon l'invention a été analysée par RMN-MAS du solide ²⁷Al sur un spectromètre Brücker de type Avance 400 MHz à l'aide d'une sonde 4 mm optimisée pour I' ²⁷Al. La vitesse de rotation de l'échantillon est voisine de 14 kHz. L'atome d'aluminium est un noyau quadripolaire dont le spin est égal à 5/2. Dans des conditions d'analyse dites sélectives, à savoir un champs de radiofréquence faible égal à 30 kHz, un angle d'impulsion faible égal à π /2 et en présence d'un échantillon saturé en eau, la technique de RMN de rotation à l'angle magique (MAS), notée RMN-MAS, est une technique quantitative. La décomposition de chaque spectre RMN-MAS permet d'accéder directement à la quantité des différentes espèces aluminiques, à savoir des atomes d'aluminium tétracoordinés Al_{IV} et des atomes d'aluminium hexacoordinés ou extra réseau Al_{VI}. Chaque spectre est calé en déplacement chimique par rapport à une solution 1 M de nitrate d'aluminium pour laquelle le signal d'aluminium est à zéro ppm. Les signaux caractérisant les atomes d'aluminium tétracoordinés Al_{IV} sont intégrés entre +40 ppm et +75 ppm ce qui correspond à l'aire 1 et les signaux caractérisant les atomes d'aluminium hexacoordinés Al_{VI} sont intégrés entre -15 ppm et +15 ppm ce qui correspond à l'aire 2. La fraction pondérale des atomes d'aluminium hexacoordinés Al_{VI}est égal au rapport aire 2/(aire 1 + aire 2).

Le paramètre cristallin de maille a0 des zéolithes Y désaluminée initiale et finale, c'est à dire après modification est mesurée par diffraction des Rayons X (DRX). Pour la zéolithe Y de type FAU, le paramètre de maille a0 est calculé à partir des positions des pics correspondant aux indices de Miller 533, 642 et 555 ("Théorie et technique de la radiocristallographie", A. Guinier, édition Dunod, 1964). La longueur de la liaison Al-O étant plus grande que celle de la liaison Si-O, plus le nombre d'aluminium en position tétraédrique dans la charpente de al zéolithe est grand, plus le paramètre a0 est grand. Pour les cristaux constitués de mailles cubiques tels que les zéolithes Y de type FAU, une relation linéaire existe entre le paramètre de maille a0 et le rapport Si/Al. ("Hydrocracking Science and Technology, J. Scherzer, A.J. Gruia, Marcel dekker Inc., 1996)

Les volumes microporeux et mésoporeux de la zéolithe Y désaluminée initiale et fianle sont mesurées par adsorption/désorption d'azote. L'analyse des courbes d'isothermes d'adsorption d'azote des solides microporeux et mésoporeux permet le calcul des volumes poreux par la technique appelée technique volumétrique. Différents types de modèles sont utilisables. La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P0= 0,95. Le volume microporeux est obtenu par la méthode du "t-plot" ou bien en mesurant le volume adsorbé à P/P0=0,35 (P=pression d'adsorption; P0 = pression de vapeur saturante de l'adsorbat à la température de l'essai). Le volume mésoporeux est obtenu en soustrayant le volume microporeux du volume poreux total.

L'acidité de Lewis et de Brønsted des zéolithes est mesurée par adsorption de Pyridine suivi par spectroscopie infra-rouge (FTIR). L'intégration des bandes caractéristiques de la pyridine coordinée à 1455 cm⁻¹ et de la pyridine protonée à 1545 cm⁻¹ permet de comparer l'acidité relative des catalyseurs de type Lewis et Bronsted, respectivement. Avant adsorption de la pyridine, la zéolithe est prétraitée sous vide secondaire à 450°C pendant 10h avec un palier intermédiaire à 150°C pendant 1 h. La pyridine est ensuite adsorbée à 150°C puis désorber sous vide secondaire à cette même température avant de prendre les spectres.

### Préparation du catalyseur

La zéolithe modifiée peut être, sans que cela soit limitatif, par exemple sous forme de poudre, poudre broyée, suspension, suspension ayant subi un traitement de désagglomération. Ainsi, par exemple, la zéolithe modifiée peut avantageusement être mise en suspension acidulée ou non à une concentration ajustée à la teneur finale en zéolithe visée sur le support. Cette suspension appelée couramment une barbotine est alors avantageusement mélangée avec les précurseurs de la matrice.

Selon un mode de préparation préféré, la zéolithe modifiée peut avantageusement être introduite lors de la mise en forme du support avec les éléments qui constituent la matrice. Par exemple, selon ce mode préféré de la présente invention, la zéolithe modifiée selon l'invention est ajoutée à un gel humide d'alumine au cours de l'étape de mise en forme du support.

Une des méthodes préférées de la mise ne forme du support dans la présente invention consiste à malaxer au moins une zéolithe modifiée, avec un gel humide d'alumine pendant quelques dizaines de minutes, puis à passer la pâte ainsi obtenue à travers une filière pour former des extrudés de diamètre compris entre 0,4 et 4 mm.

Selon un autre mode de préparation préférée, la zéolithe modifiée peut être introduite au cours, de la synthèse de la matrice. Par exemple, selon ce mode préféré de la présente invention, la zéolithe modifiée est ajoutée au cours de la synthèse de la matrice silico-aluminique ; la zéolithe peut être ajoutée à un mélange composé d'un composé d'alumine en milieu acide avec un composé de silice totalement soluble.

Le support peut être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

Au moins une calcination peut être effectuée après l'une quelconque des étapes de la préparation. Le traitement de calcination est habituellement effectué sous air à une température d'au moins 150°C, de préférence au moins 300°C, de manière plus préférée entre environ 350 et 1000°C.

Les éléments des groupes VIB et/ou les éléments non nobles du groupe VIII et éventuellement les éléments dopants choisis parmi le phosphore, le bore, le silicium et éventuellement les éléments des groupes VB, et VIIB peuvent être éventuellement introduits, tout ou partie, à toute étape de la préparation, au cours de la synthèse de la matrice, de préférence lors de la mise en forme du support, ou de manière très préférée après la mise en forme du support par toute méthode connue de l'homme du métier. Ils peuvent être introduits après la mise en forme du support et ce après ou avant le séchage et la calcination du support.

Selon un mode préféré de la présente invention, tout ou partie des éléments des groupes VIB et/ou des éléments non nobles du groupe VIII, et éventuellement les éléments dopants choisis parmi le phosphore, le bore, le silicium et éventuellement les éléments des groupes VB, et VIIB peuvent être introduits au cours de la mise en forme du support, par exemple, lors de l'étape de malaxage de la zéolithe modifiée avec un gel d'alumine humide.

Selon un autre mode préféré de la présente invention, tout ou partie des éléments des groupes VIB et/ou des éléments non nobles du groupe VIII et éventuellement ceux choisis parmi le phosphore, le bore, le silicium et éventuellement les éléments des groupes VB, et VIIA peuvent être introduits par une ou plusieurs opérations d'imprégnation du support mis en forme et calciné, par une solution contenant les précurseurs desdits éléments. D'une façon préférée, le support est imprégné par une solution aqueuse. L'imprégnation du support est de préférence effectuée par la méthode d'imprégnation dite "à sec" bien connue de l'homme du métier.

Dans le cas ou le catalyseur de la présente invention contient un métal non noble du groupe VIII, les métaux du groupe VIII sont de préférence introduits par une ou plusieurs opérations d'imprégnation du support mis en forme et calciné, après ceux du groupe VIB ou en même temps que ces derniers.

Selon un autre mode préféré de la présente invention, le dépôt de bore et de silicium peut aussi être réalisé de manière simultanée en utilisant par exemple une solution contenant un sel de bore et un composé du silicium de type silicone.

L'imprégnation du ou des éléments du groupe VB et de préférence du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

Lorsque au moins un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse EDX (analyse dispersive en énergie) des composants du catalyseur, ou bien encore par l'établissement d'une cartographie de répartition des éléments présents dans le catalyseur par microsonde électronique.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII non nobles qui peuvent être utilisées sont bien connues de l'homme du métier. Par exemple, pour les métaux non nobles on utilisera les nitrates, les sulfates, les hydroxydes, les phosphates, les halogénures comme par exemple, les chlorures, les bromures et les fluorures, les carboxylates comme par exemple les acétates et les carbonates.

La source de phosphore préférée est l'acide orthophosphorique H₃PO₄, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolyanions d'Anderson, par exemple.

La source de bore peut être l'acide borique, de préférence l'acide orthoborique H₃BO₃, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe VB qui peuvent être utilisées sont bien connues de l'homme du métier. Par exemple, parmi les sources de niobium, on peut utiliser les oxydes, tel que le pentaoxyde de diniobium Nb₂O₅, l'acide niobique Nb₂O₅.H₂O, les hydroxydes de niobium et les polyoxoniobates, les alkoxydes de niobium de formule Nb(OR1)₃ où R1 est un radical alkyle, l'oxalate de niobium NbO(HC₂O₄)₅, le niobate d'ammonium. On utilise de préférence l'oxalate de niobium ou le niobate d'ammonium.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH₄)₂ SiF₆, le tétrafluorure de silicium SiF₄ ou de sodium Na₂SiF₆. Le fluor peut être introduit par exemple par imprégnation d'une solution aqueuse d'acide fluorhydrique ou de fluorure d'ammonium.

Les catalyseurs utilisés dans le procédé selon l'invention ont avantageusement la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée. Les catalyseurs selon l'invention peuvent éventuellement être fabriqués et employés sous la forme de poudre concassée, de tablettes, d'anneaux, de billes, de roues.

Conformément à l'invention, les métaux du groupe VIB et/ou du groupe VIII non noble dudit catalyseur sont présents sous forme sulfure, le traitement de sulfuration étant décrit plus loin.

L'invention concerne également un procédé d'hydrocraquage et/ou d'hydrotraitement de charges hydrocarbonées mettant en oeuvre le catalyseur décrit ci dessus.

### Procédés d'hydrocraquage et d'hydrotraitement

L'invention porte sur un procédé d'hydrocraquage et/ou d'hydrotraitement opérant en présence d'hydrogène, à une température supérieure à 200°C, sous une pression supérieure à 1 MPa, la vitesse spatiale étant comprise entre 0,1 et 20 h⁻¹ et la quantité d'hydrogène introduite est telle que le rapport volumique litre d'hydrogène/litre d'hydrocarbure soit compris entre 80 et 5000 UL.

Plus particulièrement, l'invention porte sur un procédé d'hydroconversion et en particulier d'hydrocraquage ainsi que sur un procédé d'hydrotraitement de charges hydrocarbonées utilisant le catalyseur décrit ci dessus.

De préférence, le procédé d'hydrocraquage selon l'invention opèrent en présence d'hydrogène, à une température supérieure à 200°C, de préférence comprise entre 250 et 480°C, de manière préférée entre 320 et 450°C, de manière très préférée entre 330 et 435°C, sous une pression supérieure à 1 MPa, de préférence entre 2 et 25 MPa, de manière préférée entre 3 et 20 MPa, à la vitesse spatiale comprise entre 0,1 et 20 h⁻¹, de préférence 0,1 et 6 h⁻¹, de manière préférée entre 0,2 et 3 h⁻¹, et la quantité d'hydrogène introduite est telle que le rapport volumique litre d'hydrogène/litre d'hydrocarbure est compris entre 80 et 5000 UL et le plus souvent entre 100 et 2000 UL.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15%pds et de manière encore plus préférée comprises entre 20 et 95%pds.

L'invention porte également sur un procédé d'hydrotraitement de charges hydrocarbonées utilisant le catalyseur décrit ci dessus, ledit procédé d'hydrotraitement pouvant avantageusement être placé seul ou en amont d'un procédé d'hydrocraquage. Ledit procédé d'hydrotraitement est décrit plus loin.

### Charges

Des charges très variées peuvent être traitées par les procédés selon l'invention décrits ci-dessus. Elles contiennent avantageusement au moins 20% volume et de préférence au moins 80% volume de composés bouillant au-dessus de 340°C.

La charge est avantageusement choisie parmi les LCO (Light Cycle Oil = gazoles légers issus d'une unité de craquage catalytique), les distillats atmosphériques, les distillats sous vide tels que par exemple gasoils issus de la distillation directe du brut ou d'unités de conversion telles que le FCC, le coker ou la viscoréduction, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, et les huiles désasphaltées, prises seules ou en mélange. La liste ci-dessus n'est pas limitative. Les paraffines issues du procédé Fischer-Tropsch sont exclues. Lesdites charges ont de préférence un point d'ébullition T5 supérieur à 340°C, de préférence supérieur à 370°C, c'est à dire que 95% des composés présents dans la charge ont un point d'ébullition supérieur à 340°C, et de manière préférée supérieur à 370°C.

La teneur en azote des charges traitées dans les procédés selon l'invention est avantageusement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est avantageusement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

### Sulfuration des catalyseurs

Conformément à l'invention et préalablement à l'injection de la charge, les catalyseurs utilisés dans les procédés selon la présente invention sont soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

### Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydro-déshydrogénante. De manière très préférée, la phase CoMo ou NiMo est utilisée.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT : ACT077, ACT645, ACT961 ou HMC841, HMC845, HMC868 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

### Modes de réalisation

Les procédés d'hydrocraquage selon l'invention mettant en oeuvre les catalyseurs décrits ci dessus, couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Les procédés d'hydrocraquage selon l'invention peuvent avantageusement mettre en oeuvre ledit catalyseur décrit ci dessus seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydrotraitement classique situé en amont du catalyseur utilisé dans le procédé selon la présente invention.

Les procédés d'hydrocraquage selon l'invention peuvent avantageusement également mettre en oeuvre ledit catalyseur décrit ci dessus seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydrotraitement classique situé dans un réacteur en lit fixe ou en lit bouillonnant en amont du catalyseur utilisé dans le procédé selon la présente invention.

Le lit bouillonnant s'opère avec retrait de catalyseur usé et ajout journalier de catalyseur neuf afin de conserver une activité du catalyseur stable.

Le catalyseur décrit selon l'invention peut également avantageusement être utilisé dans la première zone réactionnelle d'hydrotraitement, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s), en lit fixe ou en lit bouillonnant.

### Procédé dit en une étape

Le procédé d'hydrocraquage selon l'invention peut avantageusement être mis en oeuvre dans un procédé dit en une étape.

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif décrit ci-dessus. Cependant, il est à noter qu'aucune séparation n'intervient entre les deux types de catalyseurs. La totalité de l'effluent en sortie de réacteur est injectée sur ledit catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Le catalyseur décrit selon l'invention est donc avantageusement mis en oeuvre dans un procédé d'hydrocraquage dit en une étape, dans une zone d'hydrocraquage placée en aval d'une zone d'hydroraffinage, aucune séparation intermédiaire n'étant mise en oeuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur décrit selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

Le catalyseur décrit selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s).

### Procédé dit en une étape en lit fixe avec séparation intermédiaire

Le procédé d'hydrocraquage selon l'invention peut avantageusement être mis en oeuvre dans un procédé dit en une étape en lit fixe avec séparation intermédiaire.

Ledit procédé comporte avantageusement une zone d'hydroraffinage, une zone permettant l'élimination partielle de l'ammoniaque, par exemple par un flash chaud, et une zone comportant ledit catalyseur d'hydrocraquage selon l'invention. Ce procédé d'hydrocraquage de charges hydrocarbonées en une étape pour la production de distillats moyens et éventuellement de bases huiles comporte avantageusement au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également avantageusement une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est avantageusement réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote.

Le catalyseur décrit selon l'invention est donc avantageusement mis en oeuvre dans un procédé d'hydrocraquage dit en une étape en lit fixe avec séparation intermédiaire, dans une zone d'hydrocraquage placée en aval d'une zone d'hydroraffinage, une séparation intermédiaire d'élimination partielle de l'ammoniaque étant mise en oeuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur décrit selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

Le catalyseur décrit selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s).

### Procédé dit en deux étapes

Le procédé d'hydrocraquage selon l'invention peut avantageusement être mis en oeuvre dans un procédé dit en deux étapes.

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en NH₃ ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent avantageusement être utilisées dans la première étape d'un schéma dit en deux étapes, que le catalyseur selon l'invention soit utilisé seul ou en association avec un catalyseur d'hydroraffinage classique.

Le catalyseur décrit selon l'invention est donc avantageusement mis en oeuvre dans un procédé d'hydrocraquage dit en deux étapes, dans la deuxième étape d'hydrocraquage placée en aval de la première étape d'hydroraffinage, une séparation intermédiaire étant mise en oeuvre entre les deux zones.

Pour les procédés dits en une étape et pour la première étape d'hydroraffinage des procédés d'hydrocraquage dits en deux étapes, les catalyseurs d'hydroraffinage classique pouvant avantageusement être utilisés sont les catalyseurs comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

### Hydrotraitement/hydroraffinage de charges hydrocarbonées

L'invention porte également sur un procédé d'hydrotraitement de charges hydrocarbonées utilisant le catalyseur décrit ci dessus, ledit procédé d'hydrotraitement pouvant avantageusement être placé seul ou en amont d'un procédé d'hydrocraquage.

L'hydrotraitement et l'hydroraffinage de charges hydrocarbonées telles que les coupes pétrolières, les coupes issues du charbon ou les hydrocarbures produits à partir du gaz naturel concerne l'hydrogénation, l'hydrodésulfuration, l'hydrodéazotation, l'hydrodéoxygénation, l'hydrodéaromatisation et l'hydrodémétallation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d'hydrotraitement selon l'invention sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent de préférence des hétéroatomes tels que le soufre, l'oxygène et l'azote et/ou au moins un métal.

Le procédé d'hydrotraitement selon l'invention opère avantageusement à une température comprise entre 200 et 450 C, de préférence entre 250 et 440°C, à une pression comprise entre 1 et 25 MPa, de préférence entre 1 et 18 MPa, à une vitesse volumique horaire comprise entre 0,1 et 20 h⁻¹, de manière préférée entre 0,2 et 5 h⁻¹, et à un rapport hydrogène/charge exprimé en volume d'hydrogène, mesuré dans les conditions normales de température et pression, par volume de charge liquide généralement comprise entre 80 UL et 5000 UL et de préférence entre 100 UL et 2000 UL.

Dans le cas où ledit procédé d'hydrotraitement est placé seul ou en amont d'un procédé d'hydrocraquage, le catalyseur décrit selon l'invention peut avantageusement être utilisé dans la zone réactionnelle d'hydrotraitement, en prétraitement convertissant, seul ou en association avec un autre catalyseur d'hydrotraitement classique, situé en amont du catalyseur décrit selon l'invention, dans un ou plusieurs lit(s) catalytique(s), dans un ou plusieurs réacteur(s). Le catalyseur utilisé dans le procédé d'hydrocraquage placé en aval du procédé d'hydrotraitement selon l'invention peut avantageusement être identique ou différent du catalyseur utilisé dans le procédé d'hydrotraitement selon l'invention.

### Exemples

### Exemple 1 - Préparation de la zéolithe Y désaluminée initiale Z1 conforme à l'invention

100g de la zéolithe NaY brute de synthèse est échangée 3 fois par une solution 1 N de NH₄NO₃ à une température de 80°C pour obtenir la zéolithe NH₄Y. La zéolithe NH₄Y subit ensuite un traitement thermique à 700°C pendant 3h en présence de 60% de vapeur d'eau. Le traitement thermique est fait en utilisant un débit de gaz formé de vapeur d'eau et d'air de 2 L/h/g de zéolithe. La zéolithe subit ensuite un traitement avec une solution de 2 mol/L de HNO₃ (V/P = 15) pendant 3h à 80°C. La zéolithe est finalement filtrée et séchée 12h à 120°C. La zéolithe est alors sous forme HY désaluminée.

La zéolithe HY désaluminée obtenue Z1 présente un rapport atomique global Si/Al = 6,2 mesuré par Fluorescence X, une fraction pondérale d'atome d'aluminium extra réseau initiale égale à 37 % poids par rapport à la masse totale de l'aluminium présent dans la zéolithe et mesurée par RMN de l'aluminium, un volume mésoporeux initial mesuré par porosimétrie à l'azote égal à 0,15 ml.g⁻¹, et un parametre cristallin initial a₀ de la maille élémentaire égal à 24,35 Å, mesuré par DRX.

### Exemple 2 - Préparation de la zéolithe Y désaluminée Z2 non-conforme à l'invention

La zéolithe Z1 préparée dans l'exemple 1 subit une deuxième série de traitement thermique en présence de vapeur d'eau et un traitement d'attaque acide par lavage acide. Le deuxième traitement thermique est réalisé à 750°C en utilisant 80% de vapeur d'eau et la solution d'acide utilisée est de 5 mol/L pendant 5h.

La zéolithe HY désaluminée Z2 présente un rapport atomique global Si/Al = 25,4 mesuré par Fluorescence X, une fraction pondérale d'atome d'aluminium extra réseau initiale égale à 12 % poids par rapport à la masse totale de l'aluminium présent dans la zéolithe mesurée par RMN de l'aluminium, un volume mésoporeux initial mesuré par porosimétrie à l'azote égal à 0,18 ml.g⁻¹, et un parametre cristallin initial a₀ de la maille élémentaire égal à 24,25 Å, mesuré par DRX.

### Exemple 3 - Préparation de la zéolithe modifiée Z3 conforme à l'invention utilisée dans le catalyseur selon l'invention.

100 g de zéolithes HY désaluminée Z1 de rapport atomique global Si/Al = 6,2 mesuré par FX préparée dans l'exemple 1 sont mélangés avec 1 L d'une solution d'hydroxyde de sodium (NaOH) 0,1 N à 60°C pendant 30min. Après refroidissement rapide dans l'eau glacée, la suspension est ensuite filtrée et la zéolithe est lavée à 50°C et séchée une nuit à 120°C. La zéolithe Y désaluminée modifiée est ensuite échangée 3 fois par une solution 1 N de NH₄NO₃ à une température de 80°C pour obtenir la forme NH₄⁺ partiellement échangée. La zéolithe est finalement calcinée à 450°C pendant 2h sous un flux d'air de 1 Uh/g de zéolithe. Les caractérisations de la zéolithe Z3 mesurées par adsorption/désorption d'azote, par fluorescence X, par RMN de I'²⁷Alet du ²⁹Si et par adsorption de pyridine suivies par IR sont données dans le tableau 1.

### Exemple 4 - Préparation de la zéolithe modifiée Z4 non conforme à l'invention.

100g de la zéolithes Y désaluminée Z2 de rapport Si/Al global égale à 25,4 sont mélangés avec 1 L d'une solution d'hydroxyde de sodium 0,3N à 60°C pendant 1h30. Après refroidissement rapide dans l'eau glacée, la suspension est ensuite filtrée et la zéolithe est lavée à 50°C et séchée une nuit à 120°C. La zéolithe Y désaluminée modifiée est ensuite échangée 3 fois par une solution 1 N de NH₄NO₃ à une température de 80°C pour obtenir la forme NH₄⁺ partiellement échangée. La zéolithe est finalement calcinée à 450°C pendant 2h sous un flux d'air de 1 L/h/g de zéolithe. Les caractérisations de la zéolithe Z4 mesurées par adsorption/désorption d'azote, par fluorescence X, par RMN de I'²⁷Al et du ²⁹Si et par adsorption de pyridine suivies par IR sont données dans le tableau 1.

**Tableau 1 : Caractérisation des échantillons.**

| | zéolithe Z1 initiale non modifiée conforme | zéolithe Z2 initiale non modifiée non conforme | zéolithe Z3 modifiée conforme à l'invention | zéolithe Z4 modifiée non conforme à l'invention |
|---|---|---|---|---|
| Si/Al global(FX) | 6,2 | 25,4 | 4,7 | 13,8 |
| % Al_{VI} (RMN) | 37 | 12 | 33 | 13 |
| S_{BET} (m²/g) | 778 | 791 | 743 | 709 |
| Vol. mésoporeux (ml/g) | 0,15 | 0,18 | 0,28 (+86%) | 0,30 (+72%) |
| Vol. microporeux (ml/g) | 0,28 | 0,27 | 0,25 (-11%) | 0,14 (-44%) |
| Acidité de Brønsted (a.u.) | 4,3 | 2,1 | 5,4 (+25%) | 1,9 (-10%) |

### Exemple 5 - Préparation des catalyseurs

Les supports de catalyseur selon l'invention contenant les zéolithes modifiées (Z3 et Z4) ou non (Z1 et Z2) sont fabriqués en utilisant 18,5 g de zéolithe mélangés à 81,5 g d'une matrice composée de boehmite tabulaire ultrafine ou gel d'alumine commercialisée sous le nom SB3 par la société Condéa Chemie Gmbh. Ce mélange de poudre est ensuite mélangé à une solution aqueuse contenant de l'acide nitrique à 66% poids (7% poids d'acide par gramme de gel sec) puis malaxé pendant 15 minutes. La pâte malaxée est ensuite extrudée à travers une filière de diamètre 1,2 mm. Les extrudés sont ensuite calcinés à 500°C durant 2 heures sous air.

Les extrudés de support ainsi préparés sont imprégnés à sec par une solution d'un mélange d'heptamolybdate d'ammonium et de nitrate de nickel et calcinés sous air à 550°C in-situ dans le réacteur. Les catalyseurs C1, C2, C3 et C4 sont ainsi préparés à partir des zéolithes non modifiées Z3 et Z4 et des zéolithes Z1 et Z2, respectivement. Les teneurs pondérales en oxydes des catalyseurs obtenus sont indiquées dans le Tableau 2.

**Tableau 2 : Caractéristiques des catalyseurs.**

| Référence du catalyseur | C1 (non conforme) | C2 (non conforme) | C3 (conforme à l'invention) | C4 (non conforme) |
|---|---|---|---|---|
| Zéolithe à la base du catalyseur | Z1 non modifiée | Z2 non modifiée | Z3 modifiée selon l'invention | Z4 modifiée |
| MoO₃ (%pds) | 12,3 | 12,2 | 12,3 | 12,0 |
| NiO (%pds) | 3,0 | 3,3 | 3,1 | 3,0 |
| SiO₂ (%pds) global | 14,3 | 14,1 | 13,9 | 14,1 |
| Complément à 100% (majoritairement composé de Al₂O₃ (%pds) | 70,4 | 70,4 | 70,7 | 70,9 |

### Exemple 6 : Comparaison des catalyseurs en hydrocraquage dit une étape d'un distillat sous vide.

Les catalyseurs dont les préparations sont décrites dans les exemples précédents sont utilisés dans les conditions de l'hydrocraquage à conversion élevée (60-100%). La charge pétrolière est un distillat sous vide ayant subi une première étape d'hydroraffinage sur un catalyseur dont les principales caractéristiques sont données dans le Tableau 3.

Aucune étape de séparation intermédiaire n'est mise en ouvre entre l'étape préalable d'hydroraffinage et l'étape d'hydrocraquage.

**Tableau 3 : Caractéristique de la charge utilisée.**

| | |
|---|---|
| Densité (20/4) | 0,869 |
| Soufre (ppm poids) | 502 |
| Azote (ppm poids) | 10 |

| Distillation simulée | |
|---|---|
| point initial | 298°C |
| point 10 % | 369°C |
| point 50 % | 427°C |
| point 90 % | 481°C |
| point final | 538°C |

On ajoute à la charge 0,6% poids d'aniline et 2% poids de diméthyl-disulfure afin de simuler les pressions partielles de H₂S et de NH₃ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320°C. Notons que toute méthode de sulfuration in-situ ou ex-situ est convenable. Une fois la sulfuration réalisée, la charge décrite dans le Tableau 3 peut être transformée. Les conditions opératoires de l'unité de test sont données dans le Tableau 4.

**Tableau 4 : Conditions de test des catalyseurs.**

| | |
|---|---|
| Pression totale | 9 Mpa |
| Catalyseur | 80 cm³ |
| Débit d'hydrogène | 80 Uh |
| Débit de charge | 80 cm³ /h |

Les performances catalytiques sont exprimées par la température qui permet d'atteindre un niveau de conversion brute de 70% et par les rendements en essence et en carburéacteur (kérosène). Ces performances catalytiques sont mesurées sur le catalyseur après qu'une période de stabilisation, généralement au moins 48 heures, ait été respectée.

La conversion brute CB est prise égale à :
CB = % pds de 380°C moins de l'effluent
avec "380°C moins" représentant la fraction, distillée à une température inférieure ou égale à 380°C.

Le rendement en carburéacteur (kérosène, 150-250, ci dessous Rdt Kéro) est égal au % poids de composés ayant un point d'ébullition compris entre 150 et 250°C dans les effluents. Le rendement en gazole (250-380) est égal au % poids de composés ayant un point d'ébullition compris entre 250 et 380°C dans les effluents.

La température de réaction est fixée de façon à atteindre une conversion brute CB égale à 70% poids. Dans le Tableau 5, nous avons reporté la température de réaction et les rendements en distillat léger et moyens pour les catalyseurs décrits dans les exemples ci-dessus.

**Tableau 5 : Activités catalytiques des catalyseurs en hydrocraquage.**

| | T(°C) | Rdt kérosène (% pds) | Rdt gazole (% pds) |
|---|---|---|---|
| C1 non conforme (préparé à partir de Z1 non modifiée) | 386 | 23,9 | 19,3 |
| C2 non conforme (préparé à partir de Z2 non modifiée) | 391 | 19,9 | 17,2 |
| C3 conforme (préparé à partir de Z3 modifiée selon l'invention) | 384 | 24,1 | 22,4 |
| C4 non conforme (préparé à partir de Z4 modifiée) | 393 | 20,3 | 18,2 |

Le catalyseur C3 préparé avec la zéolithe modifiée Z3 selon l'invention donne une activité en hydroconversion de distillat sous vide et une sélectivité en distillats moyens (kérosène + gazole) nettement améliorées par rapport aux catalyseurs C2 et C4 respectivement préparés à partir d'une zéolithe non modifiée et ne présentant pas le rapport global Si/Al requis Z2 et à partir d'une zéolithe Z3 modifiée préparée à partir de Z2 mais également par rapport au catalyseur C1 préparé à partir de la zéolithe initiale Z1 non modifiée.

## Revendications

1. Procédé d'hydrocraquage et / ou d'hydrotraitement de charges hydrocarbonées mettant en oeuvre un catalyseur comprenant une phase active contenant au moins un élément hydro-déshydrogénant choisi parmi les éléments du groupe VIB et du groupe VIII non noble de la classification périodique, pris seuls ou en mélange et un support comprenant au moins une zéolithe Y désaluminée présentant un rapport atomique global initial de silicium sur aluminium compris entre 2,5 et 20, une fraction pondérale d'atome d'aluminium extra réseau initiale supérieure à 10%, par rapport à la masse totale de l'aluminium présent dans la zéolithe, un volume mésoporeux initial mesuré par porosimétrie à l'azote supérieur à 0,07 ml.g-1, et un parametre cristallin initial a₀ de la maille élémentaire compris entre 24,38 A et 24,30 A, ladite zéolithe étant modifiée par un procédé de modification comportant a) une étape de traitement basique consistant en le mélange de ladite zéolithe Y désaluminée avec une solution aqueuse basique, ladite solution aqueuse basique étant une solution de composés basiques choisis parmi les bases alcalines et les bases fortes non alcalines, ladite étape a) étant réalisée à une température comprise entre 40 et 100°C et pendant une durée comprise entre 5 minutes et 5h et au moins une étape c) de traitement thermique réalisé à une température comprise entre 200 et 700°C, ledit catalyseur étant un catalyseur phase sulfure.

2. Procédé selon la revendication 1 dans lequel ledit catalyseur comprend au moins un métal du groupe VIB en combinaison avec au moins un métal non noble du groupe VIII, la teneur en métal du groupe VIB étant comprise, en équivalent oxyde, entre 5 et 40 % en poids par rapport à la masse totale dudit catalyseur et la teneur en métal non noble du groupe VIII étant comprise, en équivalent oxyde, entre 0,5 et 10 % en poids par rapport à la masse totale dudit catalyseur.

3. Procédé selon l'une des revendications 1 ou 2 dans lequel la zéolithe initiale Y désaluminée présente avant d'être modifiée un rapport atomique global initial de silicium sur aluminium compris entre 2,7 et 10,0.

4. Procédé selon l'une des revendications 1 à 3 dans lequel la zéolithe initiale Y désaluminée présente avant d'être modifiée une fraction pondérale d'atome d'aluminium extra réseau initiale supérieure 30% poids par rapport à la masse totale de l'aluminium présent dans la zéolithe.

5. Procédé selon l'une des revendications 1 à 4 dans lequel les bases alcalines mises en oeuvre dans la solution aqueuse basique de l'étape a) sont choisies parmi les carbonates alcalins et les hydroxydes alcalins, et les bases non alcalines sont choisies parmi les ammoniums quaternaires, pris seules ou en mélange.

6. Procédé selon l'une des revendications 1 à 5 dans lequel dans le cas ou l'étape a) de traitement basique consiste en le mélange de ladite zéolithe initiale Y désaluminée avec une solution aqueuse basique de composés choisis parmi les bases alcalines, le procédé de modification de ladite zéolithe comporte une étape b) d'au moins un échange partiel ou total desdits cations alcalins appartenant aux groupes IA et IIA de la classification périodique introduits lors de l'étape a), par des cations NH₄⁺.

7. Procédé selon l'une des revendications 1 à 5 dans lequel dans le cas ou l'étape a) de traitement basique consiste en le mélange de ladite zéolithe initiale Y désaluminée avec une solution aqueuse basique de composés choisis parmi les bases non alcalines choisies parmi les ammoniums quaternaires, pris seules ou en mélange, le procédé de modification de ladite zéolithe initiale Y désaluminée ne comporte pas d'étape b) d'au moins un échange partiel ou total intermédiaire.

8. Procédé selon l'une des revendications 1 à 7 dans lequel ledit procédé opère en présence d'hydrogène, à une température supérieure à 200°C, sous une pression supérieure à 1 MPa, la vitesse spatiale étant comprise entre 0,1 et 20 h⁻¹ et la quantité d'hydrogène introduite est telle que le rapport volumique litre d'hydrogène/litre d'hydrocarbure soit compris entre 80 et 5000 l/l.

9. Procédé selon l'une des revendications 1 à 8 dans lequel ledit procédé est mis en oeuvre dans un procédé dit en une étape.

10. Procédé selon la revendications 9 dans lequel ledit catalyseur est mis en oeuvre dans une zone d'hydrocraquage placée en aval d'une zone d'hydroraffinage, aucune séparation intermédiaire n'étant mise en oeuvre entre les deux zones.

## Patentansprüche

1. Verfahren zum Hydrocracking und/oder zur Hydrobehandlung von Kohlenwasserstoffbeschickungen, bei dem ein Katalysator eingesetzt wird, umfassend eine aktive Phase, enthaltend mindestens ein hydrierend - dehydrierendes Element, ausgewählt aus den Elementen der Gruppe VIB und den Nichtedelmetallen der Gruppe VIII des Periodensystems der Elemente, allein oder als Gemisch, und einen Träger, umfassend mindestens einen dealuminierten Zeolithen Y, der ein Ausgangs-Gesamtatomverhältnis von Silicium zu Aluminium im Bereich zwischen 2,5 und 20 aufweist, einen Ausgangs-Gewichtsanteil an Aluminiumatom außerhalb des Gitters von mehr als 10 %, bezogen auf die Gesamtmasse an Aluminium, die in dem Zeolithen vorhanden ist, ein mesoporöses Ausgangs-Volumen, gemessen mittels Stickstoffporosimetrie, größer als 0,07 ml.g⁻¹, und einen Ausgangs-Kristallparameter a₀ der Einheitszelle im Bereich zwischen 24,38 Å und 24,30 Å, wobei der Zeolith durch ein Modifikationen/erfahren modifiziert ist, umfassend a) einen Schritt zur basischen Behandlung, der im Mischen des dealuminierten Zeolithen Y mit einer wässrigen basischen Lösung besteht, wobei die wässrige basische Lösung eine Lösung basischer Verbindungen ist, ausgewählt aus alkalischen Basen und starken nicht alkalischen Basen, wobei der Schritt a) bei einer Temperatur im Bereich zwischen 40 und 100 °C und während einer Dauer im Bereich zwischen 5 Minuten und 5 Std. durchgeführt wird, und mindestens einen Schritt c) zur Wärmebehandlung, der bei einer Temperatur im Bereich zwischen 200 und 700 °C durchgeführt wird, wobei der Katalysator ein Schwefelphasen-Katalysator ist.

2. Verfahren nach Anspruch 1, in dem der Katalysator mindestens ein Metall der Gruppe VIB in Kombination mit mindestens einem Nichtedelmetall der Gruppe VIII umfasst, wobei der Gehalt an Metall der Gruppe VIB, als Oxidäquivalent, im Bereich zwischen 5 und 40 Gew.-%, bezogen auf die Gesamtmasse des Katalysators, liegt und der Gehalt an Nichtedelmetall der Gruppe VIII als Oxidäquivalent im Bereich zwischen 0,5 und 10 Gew.-%, bezogen auf die Gesamtmasse des Katalysators, liegt.

3. Verfahren nach einem der Ansprüche 1 oder 2, in dem der dealuminierte Ausgangs-Zeolith Y, bevor er modifiziert wird, ein Ausgangs-Gesamtatomverhältnis von Silicium zu Aluminium im Bereich zwischen 2,7 und 10,0 aufweist.

4. Verfahren nach einem der Ansprüche 1 bis 3, in dem der dealuminierte Ausgangs-Zeolith Y, bevor er modifiziert wird, einen Ausgangs-Gewichtsanteil an Aluminiumatom außerhalb des Gitters von mehr als 30 Gew.-%, bezogen auf die Gesamtmasse des Aluminiums, das in dem Zeolithen vorhanden ist, aufweist.

5. Verfahren nach einem der Ansprüche 1 bis 4, in dem die alkalischen Basen, die in der wässrigen basischen Lösung aus Schritt a) eingesetzt werden, ausgewählt sind aus alkalischen Carbonaten und alkalischen Hydroxiden, und die nicht alkalischen Basen ausgewählt sind aus quaternären Ammoniumverbindungen, allein oder als Gemisch.

6. Verfahren nach einem der Ansprüche 1 bis 5, bei dem, falls Schritt a) zur basischen Behandlung Im Mischen des dealuminierten Zeolithen Y mit einer wässrigen basischen Lösung aus Verbindungen, ausgewählt aus alkalischen Basen, besteht, das Modifikationsverfahren des Zeolithen einen Schritt b) zum mindestens teilweisen öder vollständigen Austausch der alkalischen Kationen, die zu den Gruppen IA und IIA des Periodensystems der Elemente gehören, die während des Schritts a) eingeführt wurden, durch [NH₄⁺]-Kationen umfasst.

7. Verfahren nach einem der Ansprüche 1 bis 5, in dem, falls Schritt a) zur basischen Behandlung im Mischen des dealuminierten Zeolithen Y mit einer wässrigen basischen Lösung aus Verbindungen, ausgewählt aus nicht alkalischen Basen, ausgewählt aus quaternären Ammoniumverbindungen, allein oder als Gemisch, besteht, das Modifikationsverfahren des dealuminierten Ausgangs-Zeolithen Y keinen Zwischenschritt b) zum mindestens teilweisen oder vollständigen Austausch umfasst.

8. Verfahren nach einem der Ansprüche 1 bis 7, in dem das Verfahren in Gegenwart von Wasserstoff, bei einer Temperatur von mehr als 200 °C, unter einem Druck von mehr als 1 MPa arbeitet, wobei die Raumgeschwindigkeit im Bereich zwischen 0,1 und 20 h⁻¹ liegt und die eingeführte Wasserstoffmenge so ist, dass das Volumenverhältnis Liter Wasserstoff/Liter Kohlenwasserstoff im Bereich zwischen 80 und 5.000 l/l liegt.

9. Verfahren nach einem der Ansprüche 1 bis 8, in dem das Verfahren in einem sogenannten Einstufenverfahren eingesetzt wird.

10. Verfahren nach Anspruch 9, in dem der Katalysator in einer Hydrocrackingzone eingesetzt wird, die stromabwärts einer Hydroraffinierungszone angeordnet ist, wobei zwischen den beiden Zone kein Zwischentrennkörper eingesetzt wird.

## Claims

1. Process for hydrocracking and/or hydrotreatment of hydrocarbon feeds using a catalyst comprising an active phase containing at least one hydrogenating/dehydrogenating component selected from the group VIB elements and the non-precious elements of group VIII of the periodic table, used alone or in a mixture, and a support comprising at least one dealuminated zeolite Y having an overall initial atomic ratio of silicon to aluminium between 2.5 and 20, an initial weight fraction of extra-lattice aluminium atoms greater than 10%, relative to the total weight of aluminium present in the zeolite, an initial mesopore volume measured by nitrogen porosimetry greater than 0.07 ml.g⁻¹, and an initial crystal lattice parameter a₀ between 24.38 Å and 24.30 Å, said zeolite being modified by a modification process comprising a) a stage of basic treatment consisting of mixing said dealuminated zeolite Y with a basic aqueous solution, said basic aqueous solution being a solution of basic compounds selected from alkaline bases and strong non-alkaline bases, said stage a) being carried out at a temperature between 40 and 100°C and for a duration between 5 minutes and 5h and at least one stage c) of thermal treatment carried out at a temperature between 200 and 700°C, said catalyst being a sulphide phase catalyst.

2. Process according to claim 1, **characterized in that** said catalyst comprises at least one metal of group VIB in combination with at least one non-precious metal of group VIII, the content of group VIB metal being, in oxide equivalent, between 5 and 40 wt.% relative to the total weight of said catalyst and the content of non-precious metal of group VIII being, in oxide equivalent, between 0.5 and 10 wt.% relative to the total weight of said catalyst.

3. Process according to one of claims 1 or 2, **characterized in that** the dealuminated initial zeolite Y has, before it is modified, an overall initial atomic ratio of silicon to aluminium between 2.7 and 10.0.

4. Process according to one of claims 1 to 3, **characterized in that** the dealuminated initial zeolite Y has, before it is modified, an initial weight fraction of extra-lattice aluminium atoms greater than 30 wt.% relative to the total weight of aluminium present in the zeolite.

5. Process according to one of claims 1 to 4, **characterized in that** the alkaline bases used in the basic aqueous solution of stage a) are selected from alkali metal carbonates and alkali metal hydroxides, and the non-alkaline bases are selected from the quaternary ammoniums, used alone or in a mixture.

6. Process according to one of claims 1 to 5, **characterized in that** in the case where stage a) of basic treatment consists of mixing said dealuminated initial zeolite Y with a basic aqueous solution of compounds selected from alkaline bases, the process for modifying said zeolite comprises a stage b) of at least one partial or complete exchange of said alkaline cations belonging to groups IA and IIA of the periodic table introduced during stage a), with NH₄⁺ cations.

7. Process according to one of claims 1 to 5, **characterized in that** in the case where stage a) of basic treatment consists of mixing said dealuminated initial zeolite Y with a basic aqueous solution of compounds selected from non-alkaline bases selected from the quaternary ammoniums, used alone or in a mixture, the process for modifying said dealuminated initial zeolite Y does not include stage b) of at least one partial or complete intermediate exchange.

8. Process according to one of claims 1 to 7, **characterized in that** said process takes place in the presence of hydrogen, at a temperature greater than 200°C, at a pressure greater than 1 MPa, the space velocity being between 0.1 and 20 h⁻¹ and the quantity of hydrogen introduced is such that the volume ratio litre of hydrogen/litre of hydrocarbon is between 80 and 5000 l/l.

9. Process according to one of claims 1 to 8, **characterized in that** said process is used in a so-called single-stage process.

10. Process according to claim 9, **characterized in that** said catalyst is used in a hydrocracking zone located downstream of a hydrorefining zone, no intermediate separation being used between the two zones.
